# EUROPÄISCHE PATENTSCHRIFT

(11) **EP 1 869 123 B1**
(45) Veröffentlichungstag und Bekanntmachung des Hinweises auf die Patenterteilung: **08.09.2010**
(21) Anmeldenummer: 06723759.4
(22) Anmeldetag: 27.03.2006
(51) Int. Cl.: C08L 69/00

(54) **FORMMASSEN AUF BASIS EINES THERMOPLASTISCHEN POLYCARBONATS**
MOLDING COMPOUNDS BASED ON A THERMOPLASTIC POLYCARBONATE
MATIERES A MOULER A BASE D'UN POLYCARBONATE THERMOPLASTIQUE

(30) Priorität: 06.04.2005 DE 102005015676; 10.02.2006 DE 102006006167
(43) Veröffentlichungstag der Anmeldung: 26.12.2007
(73) Patentinhaber: Lanxess Deutschland GmbH & Co.KG, 51369 Leverkusen (DE)
(72) Erfinder: PERSIGEHL, Peter, Jiangsu, Wuxi, Jiangsu 214121 (CN); JOSCHEK, Jens, Peter, 51061 Köln (DE); ENDTNER, Jochen, 50679 Köln (DE); JOACHIMI, Detlev, 47800 Krefeld (DE); BIENMÜLLER, Matthias, 47803 Krefeld (DE); JESCHKE, Kurt, 40597 Düsseldorf (DE)
(86) Internationale Anmeldenummer: PCT/EP2006/002782
(87) Internationale Veröffentlichungsnummer: WO 2006/105890

(56) Entgegenhaltungen:
- EP-A- 0 300 051
- EP-A- 0 320 647
- WO-A-2005/121245
- US-A- 4 503 183
- US-A- 4 515 921
- US-A- 4 532 282
- US-A- 4 604 423
- US-A- 4 639 481
- PATENT ABSTRACTS OF JAPAN Bd. 018, Nr. 558 (C-1264), 25. Oktober 1994 (1994-10-25) & JP 06 200139 A (MITSUBISHI PETROCHEM CO LTD), 19. Juli 1994 (1994-07-19)

## Beschreibung

Diese Erfindung betrifft Formmassen auf Basis eines thermoplastischen Polycarbonats und mindestens eines Copolymerisats aus mindestens einem Olefm, bevorzugt einem α-Olefin, mit mindestens einem Methacrylsäureester oder Acrylsäureester eines aliphatischen Alkohols, wobei der MFI (Melt Flow Index) des Copolymerisats 100 g/10 min nicht unterschreitet, ein Verfahren zur Herstellung dieser Formmassen sowie die Verwendung dieser Formmassen zur Herstellung von Formteilen für die Elektro-, Elektronik-, Telekommunikations-, Kraftfahrzeug-, Computerindustrie, im Sport, Haushalt, in der Medizin oder für die Unterhaltungsindustrie.

Hochfließfähige thermoplastische Zusammensetzungen sind für eine Vielzahl von Spritzgussanwendungen interessant Beispielsweise erfordern Dünnwandbauteile in der Elektro-, Elektronik- und Kfz-Industrie niedrige Viskositäten der Thermoplastzusammensetzung, damit ein Füllen der Form bei möglichst geringen Fülldrücken bzw. Schließkräften der entsprechenden Spritzgießmaschinen möglich ist. Dies trifft auch auf das gleichzeitige Füllen von mehreren Spritzgussbauteilen über ein gemeinsames Angussystem in sogenannten Vielfachwerkzeugen zu. Des Weiteren können häufig mit niederviskosen thermoplastischen Zusammensetzungen auch kürzere Zykluszeiten realisiert werden.

Trotz hoher Fließfähigkeit der thermoplastischen Zusammensetzungen werden jedoch hohe mechanische Anforderungen an die daraus herzustellenden Bauteile selber gestellt, so dass durch die Viskositätserniedrigung keine signifikante Beeinträchtigung der mechanischen Eigenschaften verursacht werden darf. Bedingt durch die Konstruktion der herzustellenden Bauteile ist es zunehmend häufig sogar so, dass die Anforderungen an die mechanischen Eigenschaften wie z. B. Schlagzähigkeit oder Randfaserdehnung höher sind als für Standard-Thermoplasten.

Es gibt mehrere Möglichkeiten, hochfließfähige, niederviskose thermoplastische Formmassen zu realisieren.

Eine Möglichkeit ist der Einsatz von niederviskosen Polymerharzen mit geringerem Molekulargewicht als Basispolymere für die thermoplastischen Formmassen. Der Einsatz niedermolekularer Polymerharze ist aber häufig mit Einbußen bei den mechanischen Eigenschaften, insbesondere der Zähigkeit, verbunden. Außerdem erfordert die Herstellung eines niederviskosen Polymerharzes auf einer bestehenden Polymerisationsanlage oftmals aufwändige und mit Investitionen verbundene Eingriffe.

Eine andere Möglichkeit ist der Einsatz von sogenannten Fließhilfsmitteln, auch als Fließmittel, Fließhilfen oder innere Gleitmittel bezeichnet, die dem Polymerharz als Additiv zugegeben werden können.

Derartige Fließhilfsmittel sind aus der Literatur wie z.B. in Kunststoffe 2000, 90 (9), S. 116-118 bekannt und können beispielsweise Fettsäureester von Polyolen oder Amide aus Fettsäuren und Aminen sein. Derartige Fettsäureester, wie beispielsweise Pentaerythritoltetrastearat oder Ethylenglykoldimontanoat, sind jedoch mit polaren Thermoplasten wie Polyamiden, Polyalkylenterephthalaten oder Polycarbonaten nur begrenzt mischbar. Sie reichern sich an der Formteiloberfläche an und werden deshalb auch als Entformungshilfsmittel eingesetzt. Sie können zudem besonders bei höheren Konzentrationen angewandt bei Wärmelagerungen aus diesen Formteilen an die Oberfläche migrieren und sich dort anreichern. Dies kann beispielsweise zu Problemen hinsichtlich Lack- oder Metallhaftung bei beschichteten Formteilen führen.

Alternativ zu den oberflächenaktiven Fließhilfsmitteln können interne Fließhilfsmittel eingesetzt werden, die mit den Polymerharzen verträglich sind. Hierfür eignen sich beispielsweise niedermolekulare Verbindungen oder verzweigte, hochverzweigte oder dendritische Polymere mit einer dem Polymerharz ähnlichen Polarität. Derartige hochverzweigte oder dendritische Systeme sind literaturbekannt und können beispielsweise auf verzweigten Polyestern, Polyamiden, Polyesteramiden, Polyethern oder Polyaminen basieren, wie sie in Kunststoffe 2001, 91 (10), S. 179-190, oder in Advances in Polymer Science 1999, 143 (Branched Polymers II), S. 1-34 beschrieben sind.

EP 0 682 057 A1 beschreibt den Einsatz des stickstoffhaltigen 4-Kaskadendendrimers der ersten Generation: 1,4-Diaominobutan[4]propylamin (N,N'-tetrabis(3-aminopropyl)-1,4-butandiamin) DAB(PA)₄ zur Erniedrigung der Viskosität in Polyamid 6, Polyamid 6,6 und Polybutylenterephthalat (PBT). Während beim Einsatz von DAB(PA)₄ zur Viskositätserniedrigung in Polyamiden die Schlagzähigkeit der erhaltenen Formmassen praktisch unbeeinflusst bleibt (Unterschied < 5%), nimmt die Schlagzähigkeit bei PBT um mehr als 15% ab.

WO-A 98 27159 beschreibt die Zähigkeitsverbesserung von glasfaserverstärkten Polyestern oder Polycarbonaten durch Verwendung von zwei Copolymerisaten aus Ethen und Acrylaten, wobei ein Copolymer zusätzlich eine reaktive Epoxid- oder Oxiranfunktion trägt. Die Fließverbesserung der Formmassen ist ein Ziel der Erfindung, das beschriebene Vergleichssystem aus Polyester und dem Copolymerisat aus Ethen und Methylacrylat hat jedoch eine höhere Schmelzeviskosität als das reine Polyestersystem.

JP 01247454 beschreibt tieftemperaturzähe Mischungen von Polyestern mit einem Copolymerisat aus Ethen und einem nichtreaktiven Alkylacrylat mit einem MFI von 5,8 g / 10 min (bei 190°C, 2,16 kg) und einem Copolymerisat aus Ethen und einem Acrylat mit zusätzlicher reaktiver Gruppe. Die Fließverbesserung von Formmassen ist nicht Thema dieses Schutzrechts.

EP-A 1 191 067 (= US 6 759 480) beschreibt die Zähmodifizierung von Thermoplasten, unter anderem von Polyamid und Polybutylenterephthalat durch eine Mischung aus einem Copolymerisat aus Ethen mit einem nichtreaktiven Alkylacrylat sowie einem Copolymerisat aus Ethen mit einem Acrylat mit zusätzlicher reaktiver Gruppe. Die Fließfähigkeit der Formmassen wird nicht diskutiert.

EP-A 0 838 501 (= US 6 020 414) beschreibt tieftemperaturzähe Mischungen von Verstärkungsstoffen und Polyestern mit einem Copolymerisat aus Ethen und einem nichtreaktiven Alkylacrylat sowie einem Copolymerisat aus Ethen und einem Acrylat mit zusätzlicher reaktiver Gruppe. Die beste Ausführungsform der Anmeldung wird dabei mit einem Copolymerisat aus Ethen und Methylacrylat erzielt. Die Fließverbesserung von Formmassen ist nicht Thema dieser Anmeldung.

WO-A 2 001 038 437 (AU 4 610 801 A) beschreibt Mischungen aus Polyester mit einem Kern-Schale-Kautschuk und zwei verschiedenen Copolymerisaten aus Ethen und Acrylaten mit und ohne zusätzlichen reaktiven Gruppen. Die Zähigkeit der Formmassen kann verbessert werden, die Fließfähigkeit auch der binären Mischungen aus Polyester und einem der genannten weiteren Bestandteile ist laut Tabelle 4 und Tabelle 9 für die verwendeten Mischungen nicht besser als für die reinen Polyester. Das verwendete Copolymerisat aus Ethen und 2-Ethyl-hexylacrylat hat einen MFI-Wert (MFI = Melt Flow Index) von 2 g/10 min (bei 190°C, 2,16 kg).

FR-A 28 19 821 beschreibt die Verwendung von Copolymeren aus Ethen mit 2-Ethylhexylacrylat, die einen MFI kleiner 100 aufweisen, als Bestandteil von Schmelzklebermischungen. Hinweise auf Anwendungen zur Elastomermodifizierung oder Fließfähigkeitsverbesserung von teilkristallinen Thermoplasten finden sich nicht.

Die Aufgabe der vorliegenden Erfindung bestand nun darin, eine Erniedrigung der Viskosität von Polykondensatzusammensetzungen auf Basis thermoplastischer Polycarbonate durch Additivierung der Polymerschmelze zu erreichen, ohne dabei Verluste bei Eigenschaften wie Kerbschlagzähigkeit in Kauf nehmen zu müssen, wie dies beim Einsatz niederviskoser Polymerharze oder bei literaturbekannten Additiven auftritt. Bezüglich Steifigkeit, Festigkeit und Dehnung sollten sich die Zusammensetzungen auf Basis thermoplatischer Polycarbonate möglichst nicht signifikant von den nicht additivierten Polykondensatzusammensetzungen auf Basis thermoplastischer Polycarbonate unterscheiden, damit ein problemloser Austausch der Materialien für Kunststoffkonstruktionen auf Basis von thermoplastischen Polycarbonaten ermöglicht wird.

Die Lösung der Aufgabe und somit Gegenstand der vorliegenden Erfindung sind thermoplastische Formmassen enthaltend
A) 99,9 bis 10 Gew.-Teile, bevorzugt 99,0 bis 40 Gew.-Teile, besonders bevorzugt 80,0 bis 50,0 Gew.-Teile, mindestens eines thermoplastischen Polycarbonats, vorzugsweise eines aromatischen Polycarbonats und/oder eines Polyestercarbonats
B) 0,1 bis 20 Gew.-Teile, vorzugsweise 0,25 bis 15 Gew.-Teile, besonders bevorzugt 1,0 bis 10 Gew.-Teile mindestens eines Copolymerisats aus mindestens einem Olefin, bevorzugt einem α-Olefin und mindestens einem Methacrylsäureester oder Acrylsäureester eines aliphatischen Alkohols, vorzugsweise eines aliphatischen Alkohols mit 5-30 Kohlenstoffatomen, wobei der MFI (Melt Flow Index) des Copolymerisats B) 100 g/10 min, vorzugsweise 150 g/10 min, nicht unterschreitet.

Der MFI (Melt Flow Index) wurde im Rahmen der vorliegenden Erfindung einheitlich bei 190°C und einem Prüfgewicht von 2,16 kg gemessen bzw. bestimmt.

Es wurde überraschend gefunden, dass Mischungen thermoplastischer Polycarbonate und eines Copolymerisats von α-Olefinen mit Methacrylsäureestern oder Acrylsäureestern aliphatischer Alkohole, die einen MFI von 100 g/10 min nicht unterschreiten, zu der gewünschten Erniedrigung der Schmelzviskosität der daraus hergestellten erfindungsgemäßen Formmassen führen und die erfindungsgemäßen Formmassen bzw. die daraus hergestellten Formteile dabei im Vergleich zu Formmassen ohne Copolymerisat sogar deutliche Verbesserungen der Kerbschlagzähigkeit aufweisen. Die Formmassen sind zum Einsatz in der Dünnwandtechnologie hervorragend geeignet.

Als Komponente A) enthalten die thermoplastischen Formmassen erfindungsgemäß mindestens ein thermoplastisches Polycarbonat, vorzugsweise aromatisches Polycarbonat und/oder ein Polyestercarbonat

Erfindungsgemäß als Komponente A) geeignete aromatische Polycarbonate und/oder aromatische Polyestercarbonate sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626 (= US 3 553 167), DE-A 2 232 877, DE-A 2 703 376 (= US 4 075 173), DE-A 2 714 544 (= US 4 156 069), DE-A 3 000 610 (= US 4 311 823), DE-A 3 832 396 (= US 4 982 014); zur Herstellung aromatischer Polyestercarbonate z. B. DE-A 3 007 934 (= CA 1 174 998 A1).

Die Herstellung aromatischer Polycarbonate erfolgt z. B. durch Schmelzeverfahren oder durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 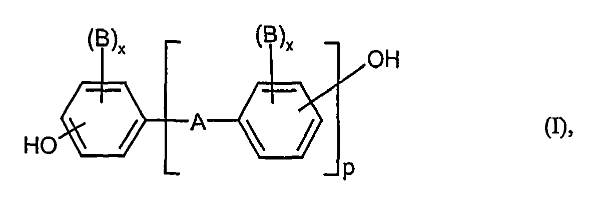 wobei
- A: für eine Einfachbindung, C₁ bis C₅-Alkylen, C₂ bis C₅-Alkyliden, C₅ bis C₆-Cycloalkyli- den, -O-, -SO-, -CO-, -S-, -SO₂-, C₆ bis C₁₂-Arylen, woran gegebenenfalls weitere aro- matische, gegebenenfalls Heteroatome enthaltende, Ringe kondensiert sein können,
oder für einen Rest der Formel (II) oder (III) steht 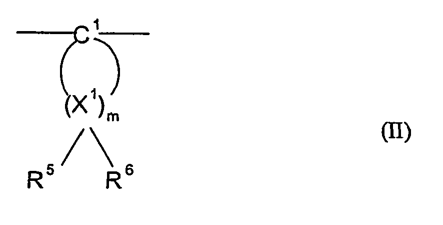 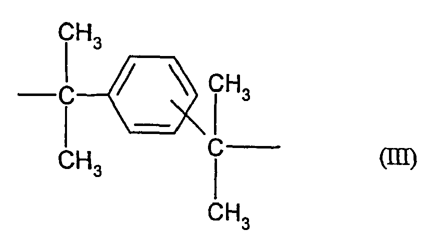
- B: für jeweils C₁ bis C₁₂-Alkyl oder Halogen steht, vorzugsweise für Methyl bzw. für Chlor und/oder Brom steht,
- x: jeweils unabhängig voneinander für 0, 1 oder 2 steht,
- p: 1 oder 0 sind, und
- R⁵ und R⁶: für jedes X¹ individuell wählbar, unabhängig voneinander für Wasserstoff oder C₁ bis C₆-Alkyl, vorzugsweise für Wasserstoff, Methyl oder Ethyl steht,
- X¹: für Kohlenstoff steht und
- m: für eine ganze Zahl von 4 bis 7, bevorzugt für 4 oder 5 steht, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)propan. Insbesondere bevorzugt ist 2,2-Bis-(4-hydroxyphenyl)propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 (= US 4 269 964) oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im Allgemeinen zwischen 0,5 Mol-%, und 10 Mol-%, bezogen auf die Molsumme der jeweils eingesetzten Diphenole.

Die als Komponente A) einzusetzenden thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung der als Komponente A) einzusetzenden Copolycarbonate können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxyaryloxy-Endgruppen eingesetzt werden. Diese sind bekannt (beispielsweise US 3 419 634) bzw. nach literaturbekannten Verfahren herstellbar. Die Herstellung Polydiorganosiloxanhaltiger Copolycarbonate wird z. B. in DE-A 3 334 782 (= US 4 584 360)beschrieben.

Bevorzugte als Komponente A) einzusetzende Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt bzw. besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mit verwendet.

Als Kettenabbrecher für die Herstellung der als Komponente A) einzusetzenden aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 (= US 4 334 053) und DE-A 3 007 934 (= CA 1 117 998 A1)).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetra-chlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den als Komponente A) einzusetzenden thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die als Komponente A) einzusetzenden thermoplastischen, aromatischen Polycarbonate und Polyestercarbonate können allein oder im beliebigen Gemisch eingesetzt werden.

Als Komponente B) enthalten die erfindungsgemäßen Zusammensetzungen Coplymerisate, bevorzugt statistische Copolymerisate aus mindestens einem Olefin, bevorzugt α-Olefin und mindestens einem Methacrylsäureester oder Acrylsäureester eines aliphatischen Alkohols, wobei der MFI des Copolymerisats B) 100 g / 10 min, vorzugsweise 150 g / 10 min nicht unterschreitet. In einer bevorzugten Ausführungsform besteht das Copolymerisat B) zu weniger als 4 Gew.-%, besonders bevorzugt zu weniger als 1,5 Gew.-% und ganz besonders bevorzugt zu 0 Gew.-% aus Monomerbausteinen, die weitere reaktive funktionelle Gruppen (ausgewählt aus der Gruppe umfassend Epoxide, Oxetane, Anhydride, Imide, Aziridine, Furane, Säuren, Amine, Oxazoline) enthalten.

Geeignete Olefine, bevorzugt α-Olefine als Bestandteil der Copolymerisate B) weisen bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen oder Propen, ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates B) ausschließlich über die Olefine in das Copolymer B) eingebracht.

Der Gehalt des Olefins am Copolymerisat B) liegt zwischen 50 und 90 Gew.-%, bevorzugt zwischen 55 und 75 Gew.-%.

Das Copolymerisat B) wird weiterhin definiert durch den zweiten Bestandteil neben dem Olefin. Als zweiter Bestandteil sind Alkylester oder Arylalkylester der Acrylsäure oder Methacrylsäure geeignet. In einer Ausführungsform der vorliegenden Erfindung werden Alkylester der Acrylsäure oder Methacrylsäure eingesetzt, deren Alkyl- oder Arylalkylgruppe aus 5-30 Kohlenstoffatomen gebildet wird. Erfindungsgemäß werden aber auch C₁-C₄-Alkylester mit umfasst, wie in den Beispielen ausgeführt werden wird. Die Alkyl- oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Geeignete Methacrylsäure- oder Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Beispielsweise kann die Alkyl- oder Arylalkylgruppe des Methacrylsäure- oder Acrylsäureesters ausgewählt sein aus der Gruppe umfassend 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkyl- oder Arylalkylgruppen mit 6-20 Kohlenstoffatomen. Bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur T_{G} führen.

Erfindungsgemäß besonders bevorzugt sind Copolymerisate B), bei denen das Olefin mit mit Acrylsäure-(2-ethyl)-hexylester copolymerisiert wird. Ebenfalls geeignet sind Mischungen der beschriebenen Acrylsäure- oder Methacrylsäureester.

Bevorzugt ist hierbei die Verwendung von mehr als 60 Gew.-%, besonders bevorzugt mehr als 90 Gew.-% und ganz besonders bevorzugt die Verwendung von 100 Gew.-% Acrylsäure-(2-ethyl)-hexylester bezogen auf die Gesamtmenge an Acrylsäure- und Methacrylsäureester im Copolymerisat B).

In einer weiteren bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des Copolymerisates B) ausschließlich über die Acrylsäure- oder Methacrylsäureester in das Copolymer B) eingebracht.

Der Gehalt der Acrylsäure- oder Methacrylsäureester am Copolymerisat B) liegt zwischen 10 und 50 Gew.-%, bevorzugt zwischen 25 und 45 Gew.-%.

Geeignete Copolymerisate B) zeichnen sich neben der Zusammensetzung durch das niedrige Molekulargewicht aus. Dementsprechend sind für die erfindungsgemäßen Formmassen nur Copolymerisate B) geeignet, die einen MFI-Wert gemessen bei 190 °C und einer Belastung von 2,16 kg von mindestens 100 g / 10 min, bevorzugt von mindestens 150 g/10 min, besonders bevorzugt von mindestens 300 g/10 min aufweisen.

Geeignete Copolymerisate der Komponente B) können beispielsweise ausgewählt sein aus der Gruppe der von der Fa. Atofina (seit Oktober 2004 Arkema) unter dem Markennamen Lotryl^{®} EH oder Lotryl^{®}BA angebotenen Materialien, die gewöhnlich als Schmelzkleber Verwendung finden.

In einer bevorzugten Ausführungsform können die erfindungsgemäßen thermoplastischen Formmassen zusätzlich zu den Komponenten A) und B) eine oder mehrere der Komponenten aus der Reihe C), D), E), F) oder G) enthalten.

In einer solchen bevorzugten Ausführungsform können also zusätzlich zu den Komponenten A) und B) noch
C) 0,001 bis 70 Gew.-Teile, vorzugsweise 5 bis 50 Gew.-Teile, besonders bevorzugt 9 bis 47 Gew.-Teile eines Füll- und/oder Verstärkungsstoffes in den thermoplastischen Formmassen enthalten sein.

Es kann aber auch eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern enthalten sein. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden erfindungsgemäß mineralische teilchenförmige Füllstoffe auf der Basis von Talk, Wollastonit, Kaolin und/oder Glasfasern eingesetzt.

Insbesondere für Anwendungen, in denen Isotropie bei der Dimensionsstabilität und eine hohe thermische Dimensionsstabilität gefordert werden, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt werden ferner auch nadelförmige mineralische Füllstoffe als Komponente C) eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm bestimmt mit einem CILAS GRANULOMETER.

Wie bereits oben beschrieben, kann der Füllstoff und/oder Verstärkungsstoff gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen beispielsweise der allgemeinen Formel (IV)

(X-(CH₂)_{q})ₖ-Si-(O-CᵣH₂ᵣ₊₁)₄₋ₖ (IV)

in der die Substituenten folgende Bedeutung haben:
- X:: NH₂-, HO-, 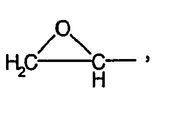
- q:: eine ganze Zahl von 2 bis 10, bevorzugt 3 bis 4,
- r:: eine ganze Zahl von 1 bis 5, bevorzugt 1 bis 2,
- k:: eine ganze Zahl von 1 bis 3, bevorzugt 1.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer alternativen bevorzugten Ausführungsform können zusätzlich zu den Komponenten A) und B) und/oder C) noch
D) 0,001 bis 30 Gew.-Teile, vorzugsweise 3 bis 22 Gew.-Teile, besonders bevorzugt 7 bis 16 Gew.-Teile mindestens eines Flammschutzmittels in den thermoplastischen Formmassen enthalten sein.

Phosphorhaltige Flammschutzmittel im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (V) 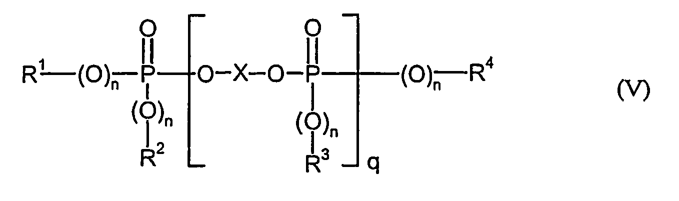 worin
- R¹, R², R³ und R⁴,: unabhängig voneinander jeweils gegebenenfalls halogeniertes C₁- bis C₈- Alkyl, jeweils gegebenenfalls durch Alkyl, vorzugsweise C₁-C₄-Alkyl, und/oder Halogen, vorzugsweise Chlor, Brom, substituiertes C₅- bis C₆-Cycloalkyl, C₆- bis C₂₀-Aryl oder C₇- bis C₁₂-Aralkyl,
- n: unabhängig voneinander, 0 oder 1
- q: 0 bis 30 und
- X: einen ein- oder mehrkernigen aromatischen Rest mit 6 bis 30 C-Atomen, oder einen linea- ren oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁-C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (V) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (V) kann, unabhängig voneinander, 0 oder 1 sein, vorzugsweise ist n gleich 1.
- q: steht für Werte von 0 bis 30. Bei Einsatz von Mischungen verschiedener Komponenten der Formel (V) können Mischungen vorzugsweise zahlen-gemittelte q-Werte von 0,3 bis 20, besonders bevorzugt 0,5 bis 10, insbesondere 0,5 bis 6 verwendet werden.
- X: steht besonders bevorzugt für 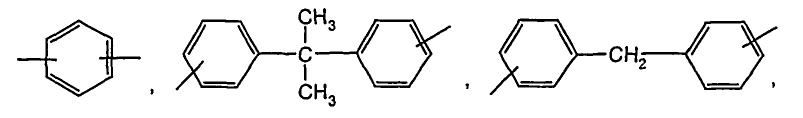 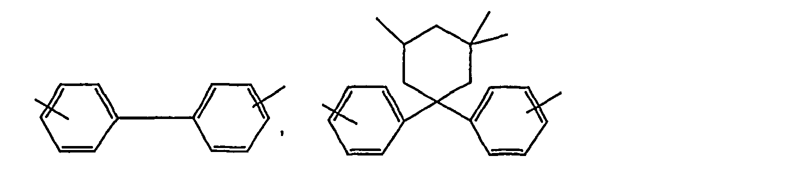 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Der Einsatz von oligomeren Phosphorsäureestem der Formel (V), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des weiteren lässt sich mit diesen Flammschutzmitteln eine besonders hohe Wärmeformbeständigkeit erzielen.

Als gegebenenfalls erfindungsgemäß einzusetzende Komponente D) können Monophosphate (q=0), Oligophosphate (q=1-30) oder Mischungen aus Mono- und Oligophosphaten eingesetzt werden.

Monophosphorverbindungen der Formel (V) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die gegebenenfalls als Komponente D) einzusetzenden Phosphorverbindungen der Formel (V) sind bekannt (vgl. z.B. EP-A 363 608 (= US 5 204 394), EP-A 640 655 (= US 5 672 645)) oder lassen sich nach bekannten Methoden in analoger Weise herstellen (z.B. Ullmanns Encyklopädie der technischen Chemie, Bd. 18, S. 301 ff: 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methoden (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Ferner als Komponente D) gegebenenfalls einzusetzende Phosphonatamine sind vorzugsweise Verbindungen der Formel (VI)

A_{3-y}-NB¹_{y} (VI)

in welcher
A für einen Rest der Formel (VIa) 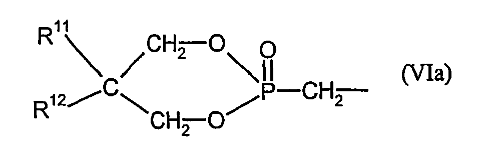 oder (VIb) 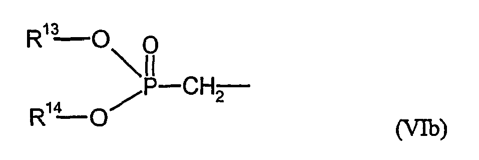 steht, worin
- R¹¹ und R¹²: unabhängig voneinander für unsubstituiertes oder substituiertes C₁-C₁₀-Alkyl oder für unsubstituiertes oder substituiertes C₆-C₁₀-Aryl, stehen,
- R¹³ und R¹⁴: unabhängig voneinander für unsubstituiertes oder substituiertes C₁-C₁₀-Alkyl oder unsubstituiertes oder substituiertes C₆-C₁₀-Aryl stehen oder
- R¹³ und R¹⁴: zusammen für unsubstituiertes oder substituiertes C₃-C₁₀-Alkylen stehen,
- y: die Zahlenwerte 0, 1 oder 2 bedeuten und
- B¹: unabhängig für Wasserstoff, gegebenenfalls halogeniertes C₂-C₈-Alkyl, unsubstituiertes oder substituiertes C₆-C₁₀-Aryl steht.
- B¹: steht vorzugsweise unabhängig für Wasserstoff, für Ethyl, n- oder iso-Propyl, welche durch Halogen substituiert sein können, unsubstituiertes oder durch C₁-C₄-Alkyl und/oder Halogen substituiertes C₆-C₁₀-Aryl, insbesondere Phenyl oder Naphthyl.

Alkyl in R¹¹, R¹², R¹³ und R¹⁴ steht unabhängig vorzugsweise für Methyl, Ethyl, n-Propyl, iso-Propyl, n-, iso-, sec. oder tert. Butyl, Pentyl oder Hexyl.

Substituiertes Alkyl in R¹¹, R¹², R¹³ und R¹⁴ steht unabhängig vorzugsweise für durch Halogen substituiertes C₁-C₁₀-Alkyl, insbesondere für ein- oder zweifach substituiertes Methyl, Ethyl, n-Propyl, iso-Propyl, n-, iso-, sec. oder tert.-Butyl, Pentyl oder Hexyl.

C₆-C₁₀-Aryl steht in R¹¹, R¹², R¹³ und R¹⁴ unabhängig vorzugsweise für Phenyl, Naphthyl oder Binaphthyl, insbesondere o-Phenyl, o-Naphthyl, o-Binaphthyl, welche durch Halogen (im Allgemeinen ein-, zwei- oder dreifach) substituiert sein können.

R¹³ und R¹⁴ können zusammen mit den Sauerstoffatomen, an die sie direkt gebunden sind, und dem Phosphoratom eine Ringstruktur bilden.

Beispielhaft und vorzugsweise werden genannt: 5,5,5',5',5",5"-Hexamethyltris(1,3,2-dioxaphosphorinan-methan)amino-2,2',2"-trioxid der Formel (VIa-1) 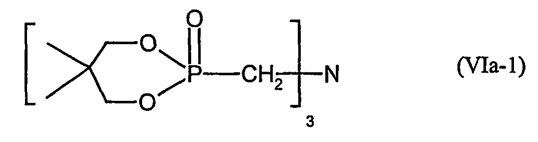 (Versuchsprodukt XPM 1000 Fa. Solutia Inc., St. Louis, USA)

1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5"5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorrian-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

### Bevorzugt sind weiterhin:

### Verbindungen der Formel (VIa-2) oder (VIa-3)

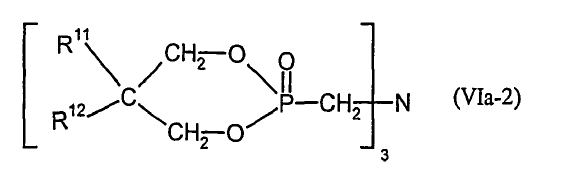

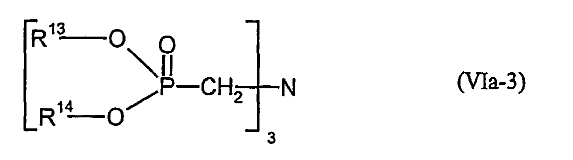

wobei
R¹¹, R¹², R¹³ und R¹⁴ die oben angegebenen Bedeutungen haben.

Besonders bevorzugt sind Verbindungen der Formel (VIa-2) und (VIa-1).

Die Herstellung der Phosphonatamine ist beispielsweise in US 5,844,028 beschrieben.

Erfindungsgemäß gegebenenfalls als Komponente D) einzusetztende Phosphazene sind Verbindungen der Formeln (VIIa) und (VIIb) 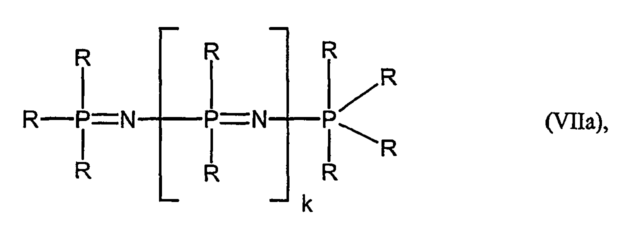 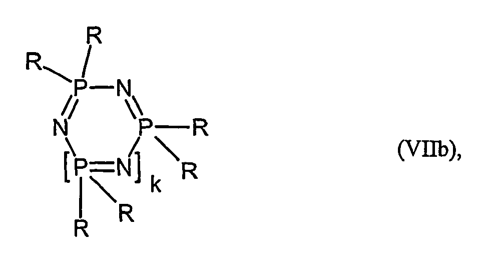 worin
- R: jeweils gleich oder verschieden ist und für Amino, jeweils gegebenenfalls halogeniertes, vorzugsweise mit Fluor halogeniertes C₁- bis C₈-Alkyl, oder C₁- bis C₈- Alkoxy, jeweils gegebenenfalls durch Alkyl, vorzugsweise C₁-C₄-Alkyl, und/oder Halogen, vorzugsweise Chlor und/oder Brom, substituiertes C₅- bis C₆-Cycloalkyl, C₆- bis C₂₀-Aryl, vorzugs- weise Phenyl oder Naphthyl, C₆- bis C₂₀-Aryloxy, vorzugsweise Phenoxy, Naphthyloxy, oder C₇- bis C₁₂-Aralkyl, vorzugsweise Phenyl-C₁-C₄-alkyl, steht,
- k: für 0 oder eine Zahl von 1 bis 15, vorzugsweise für eine Zahl von 1 bis 10 steht.

Beispielhaft seien genannt:
Propoxyphosphazen, Phenoxyphosphazen, Methylphenoxyphosphazen, Aminophosphazen und Fluoralkylphosphazene.

Bevorzugt ist Phenoxyphosphazen.

Die Phosphazene können allein oder als Mischung eingesetzt werden. Der Rest R kann immer gleich sein oder 2 oder mehr Reste in den Formeln (VIIa) und (VIIb) können verschieden sein.

Phosphazene und deren Herstellung sind beispielsweise in EP-A 728 811, DE-A 1 961668 (= US 3 654 575) und WO 97/40092 beschrieben.

Die gegebenenfalls als Komponente D) einzusetzenden Flammschutzmittel können allein oder in beliebiger Mischung untereinander oder in Mischung mit anderen Flammschutzmitteln eingesetzt werden.

In einer weiteren alternativen bevorzugten Ausführungsform können zusätzlich zu den Komponenten A) und B) und/oder C) und/oder D) noch E) Elastomermodifikatoren eingesetzt werden.

Die gegebenenfalls als Elastomermodifikator einzusetzende Komponente E) enthält mindestens ein weiteres Polymerisat ausgewählt aus der Gruppe der Vinyl(co)polymerisate und/oder kautschukmodifizierten Vinyl(co)polymerisate.

Die gegebenenfalls als Komponente E) einzusetzenden Polymerisate sind bevorzugt kautschukmodifizierte Vinyl(co)polymerisate, d.h. Pfropfpolymerisate von mindestens einem Vinylmonomeren auf mindestens einem Kautschuk mit einer Glasübergangstemperatur < 10°C als Pfropfgrundlage. Besonders bevorzugt handelt es sich bei der Komponente E) um Pfropfpolymerisate von
1 bis 60 Gew.-Teilen, vorzugsweise 5 bis 40 Gew.-Teilen, insbesondere 9 bis 25 Gew.-Teilen einer Mischung aus
50 bis 99 Gew.-%, insbesondere 50 bis 90 Gew.-%, noch bevorzugter 55 bis 85 Gew.-%, ganz besonders bevorzugt 60 bis 80 Gew.-% Vinylaromaten und/oder kemsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
1 bis 50 Gew.-%, insbesondere 10 bis 50 Gew.-%, noch bevorzugter 15 bis 45 Gew.-%, ganz besonders bevorzugt 20 bis 40 Gew.-% Vinylcyanide (ungesättigte Nitrile wie Acrylnitril und Methacrylnitril) und/oder (Meth)Acrylsäure-(C₁-C₈)-Alkylester (wie Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid) auf
95 bis 5 Gew.-%, vorzugsweise 90 bis 10 Gew.-%, insbesondere 80 bis 30 Gew.-% einer oder mehrerer, ggf. miteinander chemisch oder physikalisch aneinander gebundener Kautschuke mit Glasübergangstemperaturen <10°C, vorzugsweise <0°C, besonders bevorzugt < -20°C als Pfropfgrundlage.

Die Pfropfgrundlage hat im Allgemeinen eine mittlere Teilchengröße (d₅₀-Wert) von 0,05 bis 10 µm, vorzugsweise 0,1 bis 5 µm, besonders bevorzugt 0,2 bis 1 µm.

Die mittlere Teilchengröße d₅₀ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Bevorzugte Vinylaromaten und/oder kernsubstituierte Vinylaromaten sind Styrol, α-Methylstyrol und Methylmethacrylat, bevorzugte Vinylcyamide und/oder Derivate ungesättigter Carbonsäuren und/oder (Meth)Acrylsäurealkylester sind Acrylnitril, Maleinsäureanhydrid und Methylmethacrylat.

Besonders bevorzugte Monomere sind Styrol und Acrylnitril.

Für die Pfropfpolymerisate geeignete Pfropfgrundlagen sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke sowie Kompositkautschuke, bestehend aus zwei oder mehr der zuvor genannten Systeme.

Bevorzugte Pfropfgrundlagen sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren, wie beispielsweise Butadien/Styrol-Copolymerisate, mit der Maßgabe, dass die Glasübergangstemperatur der Pfropfgrundlage <10°C, vorzugsweise <0°C, besonders bevorzugt <-10°C liegt.

Besonders bevorzugt ist reiner Polybutadienkautschuk.

Besonders bevorzugte Pfropfpolymerisate der Komponente E) sind z.B. ABS-Polymerisate (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage beträgt vorzugsweise mindestens 30 Gew.-%, insbesondere mindestens 40 Gew.-%.

Der Gelgehalt der Pfropfgrundlage wird bei 25°C in Toluol bestimmt (M. Hoffmann, H. Krömer, R. Kuhn, Polymeranalytik I und II, Georg Thieme-Verlag, Stuttgart 1977).

Die Pfropfcopolymerisate der Komponente E) können durch radikalische Polymerisation, z.B. durch Emulsions-, Suspensions-, Lösungs- oder Massepolymerisation hergestellt werden. Vorzugsweise werden sie durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisat auch solche Produkte verstanden, die durch (Co)Polymerisation der Pfropfmonomere in Gegenwart der Pfropfgrundlage gewonnen werden und bei der Aufarbeitung mit anfallen.

Als Pfropfgrundlage geeignete Acrylatkautschuke sind vorzugsweise Polymerisate aus Acrylsäurealkylestern, gegebenenfalls auch Copolymerisate mit bis zu 40 Gew.-%, bezogen auf die Pfropfgrundlage anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage.

Bei cyclischen vernetzenden Monomeren mit mindestens drei ethylenisch ungesättigten Gruppen ist es vorteilhaft, die Menge auf unter 1 Gew.-% der Pfropfgrundlage zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Bevorzugte Vinyl(co)polymerisate sind solche Polymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren, insbesondere solche von
1 bis 45 Gew.-Teile, vorzugsweise 5 bis 37 Gew.-Teile, insbesondere 9 bis 30 Gew.-Teile einer Mischung aus
50 bis 99 Gew.-%, vorzugsweise 60 bis 80 Gew.-% Vinylaromaten und/oder kernsubstituierten Vinylaromaten wie beispielsweise Styrol, α-Methylstyrol, p-Methylstyrol, p-Chlorstyrol) und/oder Methacrylsäure-(C₁ bis C₈)-Alkylester wie Methylmethacrylat, Ethylmethacrylat), und
1 bis 50 Gew.-%, vorzugsweise 20 bis 40 Gew.-% Vinylcyanide (ungesättigte Nitrile) wie Acrylnitril und Methacrylnitril und/oder (Meth)Acrylsäure-(C₁-C₈)-Alkylester (wie Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate sind harzartig und thermoplastisch.

Besonders bevorzugt ist das Copolymerisat aus Styrol und Acrylnitril sowie Polymethylmethacrylat.

Die (Co)Polymerisate sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000.

In einer weiteren alternativen bevorzugten Ausfübrungsform können zusätzlich zu den Komponenten A) und B), und/oder C) und/oder D) und/oder E) noch F) Antidrippingmittel eingesetzt werden.

Die Flammschutzmittel entsprechend Komponente D) werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 (= US 5 672 645) beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate oder mit einer Emulsion eines Copolymerisats, vorzugsweise auf Styrol/Acrylnitril- oder PMMA-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat oder einem Copolymerisat, vorzugsweise auf Styrol/Acrylnitril- oder PMMA-Basis, eingesetzt werden. Die fluorierten Polyolefine werden als Pulver mit einem Pulver oder Granulat des Pfropfpolymerisats oder Copolymerisats vermischt und in der Schmelze im Allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Methylmethycrylat und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 80 Gew.-%.

Die fluorierten Polyolefine kommen in Konzentrationen von 0,05 bis 5 Gew.-Teilen, bevorzugt von 0,1 bis 2,0 Gew.-Teilen, insbesondere 0,2 bis 0,9 Gew.-Teilen zum Einsatz, wobei sich diese Mengenangaben bei Einsatz eines Koagulats, Präcompounds oder Masterbatches auf das reine fluorierte Polyolefin beziehen.

In einer weiteren alternativen bevorzugten Ausführungsform können zusätzlich zu den Komponenten A) und B), und/oder C) und/oder D) und/oder E) und/oder F) noch
G) 0,001 bis 25 Gew.-Teile, bevorzugt 0,05 bis 15 Gew.-Teile, besonders bevorzugt 0,1 bis 5,0 Gew.-Teile weitere übliche Additive in den thermoplastischen Formmassen enthalten sein.

Übliche Additive der Komponente G) sind z.B. Stabilisatoren (zum Beispiel UV-Stabilisatoren, Thermostabilisatoren, Gammastrahlenstabilisatoren), Antistatika, Fließhilfsmittel, Entformungsmittel, weitere Brandschutzadditive, Emulgatoren, Nukleierungsmittel, Weichmacher, Gleitmittel, Farbstoffe,Pigmente und Additive zur Erhöhung der elektrischen Leitfähigkeit. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können zum Beispiel phosphororganische Verbindungen, Phosphite, sterisch gehinderte Phenole, Hydrochinone, aromatische sekundäre Amine wie z.B. Diphenylamine, substituierte Resorcine, Salicylate, Benzotriazole und Benzophenone, sowie verschiedene substituierte Vertreter dieser Gruppen und deren Mischungen eingesetzt werden.

Als Pigmente können z.B. Titandioxid, Zinksulfid, Ultramarinblau, Eisenoxid, Ruß, Phthalocyanine, Chinacridone, Perylene, Nigrosin und Anthrachinone eingesetzt werden.

Als Nukleierungsmittel können z.B. Natrium- oder Calciumphenylphosphinat, Aluminiumoxid, Siliziumdioxid sowie bevorzugt Talkum eingesetzt werden.

Als Gleit- und Entformungsmittel können z.B. Esterwachse, Pentaerytritoltetrastearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) eingesetzt werden. Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden. Als Komponente G) können ebenfalls Polyolefine, bevorzugt Polyethylen und / oder Polypropylen eingesetzt werden. Besonders bevorzugt sind niedermolekulare Polyethylen- bzw. Polypropylenwachse.

Als Additive zur Erhöhung der elektrischen Leitfähigkeit können Ruße, Leitfähigkeitsruße, Carbonfibrillen, nanoskalige Grafit- und Kohlenstofffasern, Graphit, leitfähige Polymere, Metallfasern sowie andere übliche Additive zur Erhöhung der elektrischen Leitfähigkeit zugesetzt werden. Als nanoskalige Fasern können bevorzugt sogenannte "single wall Kohlenstoff-Nanotubes" oder "multi wall Kohlenstoff-Nanotubes" (z.B. der Firma Hyperion Catalysis) eingesetzt werden.

Erfindungsgemäß ergeben sich folgende bevorzugte Kombinationen der Komponenten
AB; A,B,C; A,B,D; A,B,E; A,B,F; A,B,G; A,B,C,D; A,B,C,E; A,B,C,F; A,B,C,G;
A,B,D,E; A,B,D,F; A,B,D,G; A,B,E,F; A,B,E,G; A,B,F,G; A,B,C,D,E;
A,B,C,D,G; A,B,C,F,G; A,B,E,F,G; A,B,D,F,G; A,B,C,D,E,F; A,B,C,D,E,G;
A,B,D,E,F,G; A,B,C,E,F,G; A,B,C,D,E,G; A,B,C,D,E,F,G.

Die vorliegende Erfindung betrifft aber auch ein Verfahren zur Herstellung der erfindungsgemäßen thermoplastischen Formmassen. Dieses erfolgt nach bekannten Verfahren durch Mischen der Komponenten. Das Mischen der Komponenten erfolgt durch Vermischen der Komponenten in den entsprechenden Gewichtsanteilen. Vorzugsweise geschieht das Mischen der Komponenten bei Temperaturen von 220 bis 330°C durch gemeinsames Vermengen, Vermischen, Kneten, Extrudieren oder Verwalzen der Komponenten. Es kann vorteilhaft sein, einzelne Komponenten vorzumischen. Es kann weiterhin vorteilhaft sein, Formteile oder Halbzeuge aus einer bei Raumtemperatur (bevorzugt 0 bis 40°C) hergestellten physikalischen Mischung (Dryblend) vorgemischter Komponenten und/oder einzelner Komponenten direkt herzustellen.

Gegenstand der Erfindung sind ferner die aus den erfindungsgemäßen Formmassen enthaltend
A) 99,9 bis 10 Gew.-Teile, bevorzugt 99,0 bis 40 Gew.-Teile, besonders bevorzugt 80,0 bis 50,0 Gew.-Teile, mindestens eines thermoplastischen Polycarbonats, vorzugsweise eines aromatischen Polycarbonats und/oder eines Polyestercarbonats und
B) 0,1 bis 20 Gew.-Teile, vorzugsweise 0,25 bis 15 Gew.-Teile, besonders bevorzugt 1,0 bis 10 Gew.-Teile mindestens eines Copolymerisats aus mindestens einem Olefin, bevorzugt einem α-Olefin und mindestens einem Methacrylsäureester oder Acrylsäureester eines aliphatischen Alkohols, vorzugsweise eines aliphatischen Alkohols mit 5 bis 30 Kohlenstoffatomen, wobei der MFI (Melt Flow Index) gemessen bei 190°C und 2,16 kg des Copolymerisats B) 100 g/10 min vorzugsweise 150 g/10 min nicht unterschreitet,
herzustellenden Formteile und Formkörper.

Daneben können für B) aber auch Copolymerisate aus mindestens einem Olefin, bevorzugt einem α-Olefin, mit mindestens einem Methacrylsäureester oder Acrylsäureester eines aliphatischen C₁-C₄-Alkohols eingesetzt werden, um entsprechende Formteile oder Formkörper zu erhalten.

Die aus den erfindungsgemäß eingesetzten Zusammensetzungen auf Basis thermoplastischer Polycarbonate hergestellten erfindungsgemäßen Formteile zeichnen sich durch eine höhere Kerbschlagzähigkeit aus als Formteile, hergestellt aus Formmassen vergleichbarer Viskosität, die durch Einsatz eines niedrigerviskosen Basisharzes als Komponente A) hergestellt wurden und sogar als Formteile, hergestellt aus Formmassen, die durch Einsatz eines hochviskosen Basisharzes als Komponete A) hergestellt wurden. Dabei sind andere mechanische Kemwerte ohne signifikannte Einbußen auf dem Niveau des unmodifizierten Materials erhältlich und somit eine Materialsubstitution möglich.

Die erfindungsgemäßen Formmassen zeigen eine deutlich verbesserte Fließfähigkeit, insbesondere bei den für Thermoplastverarbeitung relevanten Scherraten. Dies zeigt sich unter anderem auch an den deutlich reduzierten Fülldrucken.

Die erfindungsgemäßen Formmassen können nach üblichen Verfahren, beispielsweise durch Spritzguss oder Extrusion, zu Formteilen oder Halbzeugen verarbeitet werden. Beispiele für Halbzeuge sind Folien und Platten. Besonders bevorzugt ist die Spritzgießverarbeitung.

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formteilen verwendet werden:
Innenausbauteile für Schienenfahrzeuge, Schiffe, Flugzeuge, Busse und Automobile, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Karosserieteile für KFZ, Wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte, Sicherheitsteile im Automobilinnenraum.

Insbesondere können die erfindungsgemäßen Formmassen für Anwendungen eingesetzt werden, für die eine hohe Schmelzefließfähigkeit erforderlich ist. Ein Beispiel für derartige Anwendungen ist die sogenannte Dünnwandtechnologie, bei der die aus den Formmassen herzustellenden Formteile Wanddicken von weniger als 2,5 mm, bevorzugt weniger als 2,0 mm, besonders bevorzugt weniger als 1,5 mm und am meisten bevorzugt weniger als 1,0 mm aufweisen. Ein weiteres Beispiel für derartige Anwendungen ist die Zykluszeitverkürzung z.B. durch Absenkung der Verarbeitungstemperatur. Ein weiteres Anwendungsbeispiel ist die Verarbeitung der Formmassen über sogenannte Multiwerkzeuge, bei denen über ein Angusssystem mindestens 4 Formen, bevorzugt mindestens 8 Formen, besonders bevorzugt mindestens 12 Formen, am meisten bevorzugt mindestens 16 Formen in einem Spritzgussvorgang gefüllt werden.

### Beispiele:

**Komponente A1:** Lineares Polycarbonat auf Basis Bisphenol A mit einer relativen Lösungsviskosität von 1,28, gemessen in CH₂Cl₂ als Lösungsmittel bei 25°C und in einer Konzentration von 0,5 g/100 ml.
**Komponente A2:** Lineares Polycarbonat auf Basis Bisphenol A mit einer relativen Lösungsviskosität von 1,24, gemessen in CH₂Cl₂ als Lösungsmittel bei 25°C und in einer Konzentration von 0,5 g/100 ml.
**Komponente B1:** Copolymerisat aus Ethen und Acrylsäure-2-ethylhexylester mit einem Ethen-Anteil von 63 Gew.-% und einem MFI von 550 (Lotryl^{®} 37 EH 550 der Atofina Deutschland, Düsseldorf (seit Oktober 2004 Arkema GmbH)) [CAS-Nr. 26984-27-0]
**Komponente B2:** Copolymerisat aus Ethen und Acrylsäure-n-butylester mit einem Ethen-Anteil von 70-74 Gew.-% und einem MFI von 175 (Lotryl^{®} 28 BA 175 der Atofina Deutschland, Düsseldorf (seit Oktober 2004 Arkema GmbH)) [CAS-Nr. 25750-84-9]
**Vergleichskomponente V:** Copolymerisat aus Ethen, Methylacrylat und Glycidylacrylat mit einem Anteil von 26 Gew.-% Methylacrylat und 8 % Glycidylacrylat sowie einem MFI von 6 (Lotader^{®} AX 8900 der Atofina Deutschland, Düsseldorf (seit Oktober 2004 Arkema GmbH))
**Komponente E:** Pfropfpolymerisat von 40 Gew.-Teilen Styrol und Acrylnitril im Gewichtsverhältnis von 73:27 auf 60 Gew.-Teile teilchenförmigen vernetzten Polybutadienkautschuks (mittlerer Teilchendurchmesser d₅₀ = 0,3 µm), hergestellt durch Emulsionspolymerisation und Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C), wobei das Verhältnis von Pfropfpolymerisat und Styrol/Acrylnitril-Copolymerisat 3:4 bezogen auf Gewichtsanteile beträgt.
**Komponente G:** Als weitere Additive wurden die folgenden, für die Verwendung in thermoplastischen Polycarbonaten gebräuchlichen Komponenten eingesetzt:
   Thermostabilisator: Übliche Stabilisatoren auf Basis von Phenylphosphiten in Mengen von 0,01 bis 0,8 Gew.-%.
   Entformungsmittel: Handelsübliche Fettsäureester in Mengen von 0,1 bis 0,86 Gew.-%.

Die verwendeten weiteren Additive (Komponente G) stimmen für entsprechende Vergleichsbeispiele und Beispiele jeweils in Art und Menge überein.

Die Zusammensetzungen auf Basis von Polycarbonat der Beispiele und Vergleichsbeispiele in Tabelle 1 wurden auf einem Zweiwellenextruder des Typs ZSK32 (Werner und Pfleiderer) bei Massetemperaturen von 260 bis 300°C zu Formmassen compoundiert, die Schmelze wurde in ein Wasserbad ausgetragen und anschließend granuliert.

Die Prüfkörper für die in der Tabelle 1 aufgeführten Untersuchungen wurden auf einer Spritzgießmaschine des Typs Arburg 320-210-500 bei einer Massetemperatur von ca. 280°C und einer Werkzeugtemperatur von ca. 80 °C verspritzt:
- Schulterstäbe (3 mm Dicke gemäß ISO 527)
- Prüfstäbe 80x10x4 mm (gem. ISO 178)

Der Fülldruck ist der angussnah gemessene Werkzeuginnendruck, der aufgebracht wird, um die Werkzeugkavität zu füllen. Er ist in der Druckverlauffcurve ein charakteristischer Knickpunkt zwischen der Formfüll- und Verdichtungsphase und lässt sich über die Prozessdatenerfassung ermitteln. Er wurde für Vergleichsbeispiele und Beispiele beim Spritzgießen von Flachstäben (80 x 10 x 4 mm³) und Schulterstäben (3 mm) auf zwei verschiedenen Spritzgießmaschinen (I und II) bestimmt.

Bis auf die Schmelzeviskositätsmessungen und die Messungen der Schmelzindices wurden alle Untersuchungen an o.g. Prüfkörpern durchgeführt.

Zug-Versuch nach DIN / EN / ISO 527-2/1A.

Kerbschlagzähigkeit: IZOD-Methode nach ISO 180 1A bei Raumtemperatur

Vicat-Erweichungstemperatur: Bestimmt nach DIN ISO 306 nach Verfahren B (50 N Belastung) und mit Heizraten von 120 K/h.

Schmelzeviskosität: Bestimmt nach DIN 54811 / ISO 11443 bei der angegebenen Scherrate und Temperatur mit dem Gerät Viscorobo 94.00 der Fa. Göttfert nach Trocknung des Granulats bei 120°C für 4 Stunden im Vakuumtrockner.

Schmelzindex MVR (Schmelze-Volumenfließrate): Bestimmt nach DIN EN ISO 1133 bei der angegebenen Kraft und Temperatur nach Trocknung des Granulats bei 120 °C für 4 Stunden im Vakuumtrockner.

| Tabelle 1 | | Vgl. 1 | Vgl. 2 | Vgl. 3 | Bsp. 1 | Bsp. 2 | Bsp. 3 | Bsp. 4 | Bsp. 5 | Bsp. 6 | Vgl. 4 |
|---|---|---|---|---|---|---|---|---|---|---|---|
| Komponente A1 | [%] | 28,13 | 57,13 | - | 25,63 | 52,13 | - | 25,63 | 52,13 | - | 25,63 |
| Komponente A2 | [%] | 29,0 | - | 57,13 | 26,5 | - | 52,13 | 26,5 | - | 52,13 | 26,5 |
| Komponente E | [%] | 42,0 | 42,0 | 42,0 | 42,0 | 42,0 | 42,0 | 42,0 | 42,0 | 42,0 | 42,0 |
| Komponente G | [%] | 0,87 | 0,87 | 0,87 | 0,87 | 0,87 | 0,87 | 0,87 | 0,87 | 0,87 | 0,87 |
| Komponente B 1 | [%] | - | - | - | 5,0 | 5,0 | 5,0 | - | - | - | - |
| Komponente B2 | [%] | - | - | - | - | - | - | 5,0 | 5,0 | 5,0 | - |
| Vergleichskomponente V | [%] | - | - | - | - | - | - | - | - | - | 5,0 |
| MVR bei 260°C/ 5 kg | [cm³/10min] | 11 | 9 | 13 | 17 | 13 | 16 | 18 | 14 | 17 | 4 |
| Schmelzviskosität bei 260°C: | | | | | | | | | | | |
| Eta 50 | [Pas] | 870 | 1020 | 870 | 540 | 610 | 529 | 630 | 660 | 580 | 1400 |
| Eta 500 | [Pas] | 320 | 350 | 330 | 220 | 240 | 212 | 260 | 270 | 230 | 430 |
| Eta 1000 | [Pas] | 230 | 240 | 210 | 180 | 170 | 160 | 180 | 180 | 170 | 270 |
| Eta 1500 | [Pas] | 160 | 170 | 170 | 130 | 130 | 120 | 140 | 140 | 130 | 210 |
| Schmelzviskosität bei 280°C: | | | | | | | | | | | |
| Eta 50 | [Pas] | 570 | 610 | 520 | 420 | 440 | 450 | 430 | 520 | 290 | 850 |
| Eta 500 | [Pas] | 240 | 240 | 220 | 140 | 160 | 150 | 170 | 210 | 150 | 300 |
| Eta 1000 | [Pas] | 170 | 180 | 150 | 130 | 120 | 100 | 120 | 150 | 110 | 200 |
| Eta 1500 | [Pas] | 130 | 130 | 120 | 90 | 100 | 90 | 100 | 120 | 90 | 160 |
| Zugversuch (50 mm/min): | | | | | | | | | | | |
| Streckspannung (SST) | [N/mm²] | 52 | 52 | 52 | 46 | 46 | 46 | 47 | 47 | 46 | 38 |
| Streckdehnung (DST) | [%] | 4,1 | 4,2 | 4,0 | 4,2 | 4,2 | 4,3 | 4,7 | 4,7 | 4,6 | 6,5 |
| Zug-Modul | [N/mm²] | 2100 | 2150 | 2150 | 1900 | 1950 | 1900 | 1900 | 1900 | 1850 | 1650 |
| Izod-Kerbschlagzähigkeit | | | | | | | | | | | |
| (IS0180/1A), RT | [kJ/m²] | 47 | 48 | 43 | 68 | 86 | 57 | 93 | 95 | 73 | 43 |
| Vicat B (120 K/h) | [°C] | 122 | 123 | 118 | 116 | 116 | 116 | n.g. | n.g. | n.g. | 118 |
| Fülldruck Spritzgießmaschine I | | | | | | | | | | | |
| Flachstab | [bar] | 225 | 235 | 210 | 180 | 190 | 175 | n.g. | n.g. | n.g. | 275 |
| Schulterstab | [bar] | 355 | 375 | 340 | 300 | 315 | 295 | n.g. | n.g. | n.g. | 435 |
| Fülldruck Spritzgießmaschine II | | | | | | | | | | | |
| Flachstab | [bar] | 185 | 188 | 168 | 156 | 160 | 145 | 157 | 161 | 145 | n.g. |
| Schulterstab | [bar] | 299 | 311 | 275 | 258 | 263 | 239 | 258 | 259 | 241 | n.g. |

| | | | | | | | | | | | |
|---|---|---|---|---|---|---|---|---|---|---|---|
| n.g. = nicht gemessen | | | | | | | | | | | |

## Patentansprüche

1. Verfahren zur Erniedrigung der Viskosität von Polykondensatzusammensetzungen auf Basis thermoplastischer Polycarbonate, **dadurch gekennzeichnet, dass** thermoplastische Formmassen enthaltend
A) 99,9 bis 10 Gew.-Teile mindestens eines thermoplastischen Polycarbonats und
B) 0,1 bis 20 Gew.-Teile mindestens eines Copolymerisats aus mindestens einem Olefin und Acrylsäure-(2-ethyl)-hexylester, wobei der MFI des Copolymerisats B) 100 g/10 min nicht unterschreitet, eingesetzt werden.

2. Verfahren gemäß Anspruch 1, **dadurch gekennzeichnet, dass** in den thermoplastischen Formmassen das Copolymerisat B) zu weniger als 4 Gew.-% aus Monomerbausteinen besteht, die weitere reaktive funktionelle Gruppen, ausgewählt aus der Gruppe umfassend Epoxide, Oxetane, Anhydride, Imide, Aziridine, Furane, Säuren, Amine, Oxazoline enthalten.

3. Verfahren gemäß der Ansprüche 1 bis 2, **dadurch gekennzeichnet, dass** im Copolymerisat B) das Olefin Ethen ist.

4. Verfahren gemäß der Ansprüche 1 bis 3, **dadurch gekennzeichnet, dass** der MFI des Copolymerisats B) 150 g/10 min nicht unterschreitet.

5. Verfahren gemäß den Ansprüchen 1 bis 4, **dadurch gekennzeichnet, dass** die thermoplastischen Formmassen zusätzlich zu A) und B) eine oder mehrere Komponenten der Reihe
C) 0,001 bis 70 Gew.-Teile mindestens eines Füll- oder Verstärkungsstoffes,
D) 0,001 bis 30 Gew.-Teile mindestens eines Flammschutzadditivs,
E) 0,001 bis 60 Gew.-Teile mindestens eines Elastomermodifikators,
F) 0,05 bis 5 Gew.-Teile eines Antidrippingmittels,
G) 0,001 bis 25 Gew.-Teile weitere übliche Additive enthalten.

6. Thermoplastische Formmassen enthaltend
A) 99,9 bis 10 Gew.-Teile mindestens eines thermoplastischen Polycarbonats und
B) 0,1 bis 20 Gew.-Teile mindestens eines Copolymerisats aus mindestens einem Olefin und Acrylsäure-(2-ethyl)-hexylester, wobei der MFI des Copolymerisats B) 100 g/10 min nicht unterschreitet.

7. Thermoplastische Formmassen gemäß Anspruch 6, **dadurch gekennzeichnet, dass** im Copolymerisat B) das Olefin Ethen ist.

8. Thermoplastische Formmassen gemäß der Ansprüche 6 oder 7, **dadurch gekennzeichnet, dass** in den thermoplastischen Formmassen das Copolymerisat B) zu weniger als 4 Gew.-% aus Monomerbausteinen besteht, die weitere reaktive funktionelle Gruppen, ausgewählt aus der Gruppe umfassend Epoxide, Oxetane, Anhydride, Imide, Aziridine, Furane, Säuren, Amine, Oxazoline enthalten.

9. Thermoplastische Formmassen gemäß der Ansprüche 6 bis 8, **dadurch gekennzeichnet, dass** diese zusätzlich zu A) und B) eine oder mehrere Komponenten der Reihe
C) 0,001 bis 70 Gew.-Teile mindestens eines Füll- oder Verstärkungsstoffes,
D) 0,001 bis 30 Gew.-Teile mindestens eines Flaminschutzadditivs,
E) 0,001 bis 60 Gew.-Teile mindestens eines Elastomermodifikators,
F) 0,05 bis 5 Gew.-Teile eines Antidrippingmittels,
G) 0,001 bis 25 Gew.-Teile weitere übliche Additive enthalten.

10. Verfahren zur Herstellung der thermoplastischen Formmassen gemäß der Ansprüche 6 bis 9, **dadurch gekennzeichnet, dass** man die Komponenten in den entsprechenden Gewichtsanteilen vermischt.

11. Formteile oder Halbzeuge erhältlich durch Spritzguss oder Extrusion der Formmassen gemäß der Ansprüche 6 bis 9.

12. Verwendung der Formmassen gemäß der Ansprüche 6 bis 9 zum Einsatz in der Dünnwandtechnologie.

13. Multiwerkzeuge erhältlich durch Füllen von mindestens 4 Formen mit Formmassen gemäß den Ansprüchen 6 bis 9 in einem Spritzgussvorgang über ein Angusssystem.

14. Verwendung der Formteile oder Halbzeuge gemäß Anspruch 11 oder der Multiwerkzeuge gemäß Anspruch 13 in der Elektro-, Elektronik-, Telekommunikations-, Kraftfahrzeug-, Computerindustrie, im Sport, in der Medizin im Haushalt oder in der Unterhaltungsindustrie.

## Claims

1. Process for lowering the viscosity of polycondensate compositions based on thermoplastic polycarbonates, **characterized in that** thermoplastic moulding compositions are used comprising
A) from 99.9 to 10 parts by weight of at least one thermoplastic polycarbonate and
B) from 0.1 to 20 parts by weight of at least one copolymer of at least one olefin and 2-ethylhexyl acrylate, where the MFI of the copolymer B) is no less than 100 g/10 min.

2. Process according to Claim 1, **characterized in that**, in the thermoplastic moulding compositions, the copolymer B) is composed of less than 4% by weight of monomer units which contain further reactive functional groups selected from the group consisting of epoxides, oxetanes, anhydrides, imides, aziridines, furans, acids, amines, oxazolines.

3. Process according to Claims 1 and 2, **characterized in that**, in the copolymer B), the olefin is ethene.

4. Process according to Claims 1 to 3, **characterized in that** the MFI of the copolymer B) is no less than 150 g/10 min

5. Process according to Claims 1 to 4, **characterized in that** the thermoplastic moulding compositions comprise, in addition to A) and B), one or more components from the following series:
C) from 0.001 to 70 parts by weight of at least one filler or reinforcing material,
D) from 0.001 to 30 parts by weight of at least one flame-retardant additive,
E) from 0.001 to 60 parts by weight of at least one elastomer modifier,
F) from 0.05 to 5 parts by weight of an antidripping agent,
G) from 0.001 to 25 parts by weight of further conventional additives.

6. Thermoplastic moulding compositions comprising
A) from 99.9 to 10 parts by weight of at least one thermoplastic polycarbonate and
B) from 0.1 to 20 parts by weight of at least one copolymer of at least one olefin and 2-ethylhexyl acrylate, where the MFI of the copolymer B) is no less than 100 g/10 min.

7. Thermoplastic moulding compositions according to Claim 6, **characterized in that**, in the copolymer B), the olefin is ethene.

8. Thermoplastic moulding compositions according to Claim 6 or 7, **characterized in that**, in the thermoplastic moulding compositions, the copolymer B) is composed of less than 4% by weight of monomer units which contain further reactive functional groups selected from the group consisting of epoxides, oxetanes, anhydrides, imides, aziridines, furans, acids, amines, oxazolines.

9. Thermoplastic moulding compositions according to Claims 6 to 8, **characterized in that** these comprise, in addition to A) and B), one or more components from the following series:
C) from 0.001 to 70 parts by weight of at least one filler or reinforcing material,
D) from 0.001 to 30 parts by weight of at least one flame-retardant additive,
E) from 0.001 to 60 parts by weight of at least one elastomer modifier,
F) from 0.05 to 5 parts by weight of an antidripping agent,
G) from 0.001 to 25 parts by weight of further conventional additives.

10. Process for preparation of the thermoplastic moulding compositions according to Claims 6 to 9, **characterized in that** the components are mixed in the corresponding proportions by weight.

11. Mouldings or semifinished products obtainable via injection moulding or extrusion of the moulding compositions according to Claims 6 to 9.

12. Use of the moulding compositions according to Claims 6 to 9 for thin-wall-technology applications.

13. Multitooling systems obtainable by charging moulding compositions according to Claims 6 to 9 by way of a runner system to at least 4 moulds in an injection-moulding procedure.

14. Use of the mouldings or semifinished products according to Claim 11 or of the multitooling systems according to Claim 13 in the electrical industry, electronics industry, telecommunications industry, motor vehicle industry, or computer industry, in sports, in medicine, in households, or in the entertainment industry.

## Revendications

1. Procédé de réduction de la viscosité de compositions de polycondensat à base de polycarbonates thermoplastiques, **caractérisé en ce que** des matériaux de moulage thermoplastiques contenant
A) 99,9 à 10 parties en poids d'au moins un polycarbonate thermoplastique et
B) 0,1 à 20 parties en poids d'au moins un copolymère d'au moins une oléfine et d'ester (2-éthyl)-hexylique de l'acide acrylique, le MFI du copolymère B) n'étant pas inférieur à 100 g/10 min, sont utilisés.

2. Procédé selon la revendication 1, **caractérisé en ce que** dans les matériaux de moulage thermoplastiques, le copolymère B) est constitué à moins de 4 % en poids de constituants monomères qui contiennent des groupes fonctionnels réactifs supplémentaires choisis dans le groupe comprenant les époxydes, les oxétanes, les anhydrides, les imides, les aziridines, les furanes, les acides, les amines, les oxazolines.

3. Procédé selon les revendications 1 à 2, **caractérisé en ce que** l'oléfine dans le copolymère B) est l'éthène.

4. Procédé selon les revendications 1 à 3, **caractérisé en ce que** le MFI du copolymère B) n'est pas inférieur à 150 g/10 min.

5. Procédé selon les revendications 1 à 4, **caractérisé en ce que** les matériaux de moulage thermoplastiques contiennent, en plus de A) et B), un ou plusieurs composants de la série
C) 0,001 à 70 parties en poids d'au moins une charge ou matière renforçante,
D) 0,001 à 30 parties en poids d'au moins un additif ignifuge,
E) 0,001 à 60 parties en poids d'au moins un modificateur élastomère,
F) 0,05 à 5 parties en poids d'un agent anti-égouttement,
G) 0,001 à 25 parties en poids d'additifs usuels supplémentaires.

6. Matériaux de moulage thermoplastiques contenant
A) 99,9 à 10 parties en poids d'au moins un polycarbonate thermoplastique et
B) 0,1 à 20 parties en poids d'au moins un copolymère d'au moins une oléfine et d'ester (2-éthyl)-hexylique de l'acide acrylique, le MFI du copolymère B) n'étant pas inférieur à 100 g/10 min.

7. Matériaux de moulage thermoplastiques selon la revendication 6, **caractérisés en ce que** l'oléfine dans le copolymère B) est l'éthène.

8. Matériaux de moulage thermoplastiques selon les revendications 6 ou 7, **caractérisés en ce que** dans les matériaux de moulage thermoplastiques, le copolymère B) est constitué à moins de 4 % en poids de constituants monomères qui contiennent des groupes fonctionnels réactifs supplémentaires choisis dans le groupe comprenant les époxydes, les oxétanes, les anhydrides, les imides, les aziridines, les furanes, les acides, les amines, les oxazolines.

9. Matériaux de moulage thermoplastiques selon les revendications 6 à 8, **caractérisés en ce que** ceux-ci contiennent, en plus de A) et B), un ou plusieurs composants de la série
C) 0,001 à 70 parties en poids d'au moins une charge ou matière renforçante,
D) 0,001 à 30 parties en poids d'au moins un additif ignifuge,
E) 0,001 à 60 parties en poids d'au moins un modificateur élastomère,
F) 0,05 à 5 parties en poids d'un agent anti-égouttement,
G) 0,001 à 25 parties en poids d'additifs usuels supplémentaires.

10. Procédé de fabrication de matériaux de moulage thermoplastiques selon les revendications 6 à 9, **caractérisé en ce que** les composants sont mélangés dans les proportions en poids correspondantes.

11. Pièces moulées ou produits semi-finis pouvant être obtenus par moulage par injection ou extrusion des matériaux de moulage selon les revendications 6 à 9.

12. Utilisation des matériaux de moulage selon les revendications 6 à 9 pour une application dans la technologie des parois minces.

13. Outils polyvalents pouvant être obtenus par remplissage d'au moins 4 moules avec des matériaux de moulage selon les revendications 6 à 9 dans un processus de moulage par injection par un système d'alimentation.

14. Utilisation des pièces moulées ou des produits semi-finis selon la revendication 11 ou des outils polyvalents selon la revendication 13 dans l'industrie électrique, électronique, des télécommunications, automobile, informatique, dans le domaine du sport, de la médecine, dans le domaine ménager ou dans l'industrie du divertissement.
